# EUROPEAN PATENT APPLICATION

(11) **EP 3 462 009 A1**
(43) Date of publication of application: **03.04.2019**
(21) Application number: 18196486.7
(22) Date of filing: 25.09.2018
(51) Int. Cl.: F02D 41/00, F02D 41/02, F02D 41/14

(54) **CONTROLLER AND CONTROL METHOD FOR INTERNAL COMBUSTION ENGINE**

(30) Priority: 27.09.2017 JP 2017186392
(71) Applicant: TOYOTA JIDOSHA KABUSHIKI KAISHA, Toyota-shi, Aichi-ken, 471-8571 (JP)
(72) Inventor: MYOJO, Keiichi, Aichi-ken, 471-8571 (JP); NOSE, Yuki, Aichi-ken, 471-8571 (JP); IKUTA, Eiji, Aichi-ken, 471-8571 (JP)
(74) Representative: D Young & Co LLP

(57) **Abstract**

In a dither control process of a fuel injection valve, at least one of a number of cylinders (#w) is set as a rich combustion cylinder and another at least one of the cylinders (#x, #y, #z) is set as a lean combustion cylinder. The temperature raising capability required for the dither control process in the second mode is higher than the temperature raising capability in the first mode. A time integration value is obtained by integrating an absolute value of a difference between an air-fuel ratio of the rich combustion cylinder and an air-fuel ratio of the lean combustion cylinder over a predetermined period. In an enlarging process, a time integration value of the second mode is set to be greater than a time integration value of the first mode.

## Description

### BACKGROUND

The present invention relates to a device and method for controlling an internal combustion engine including an exhaust gas purifier, which purifies exhaust gas discharged from a plurality of cylinders, and a fuel injection valve, which is provided for each of the cylinders.

Japanese Laid-Open Patent Publication No. 2016-223386 describes a control device (controller) that executes a dither control process in which, when there is a request for raising the temperature of a catalytic device (catalyst), the air-fuel ratio in some cylinders is set to be richer than the stoichiometric air-fuel ratio and the air-fuel ratio in the remaining cylinders is set to be leaner than the stoichiometric air-fuel ratio. During the dither control process, the control device executes a control for cyclically switch the rich cylinders.

When switching the rich cylinders, if the air-fuel ratio of a rich cylinder is suddenly changed to a lean air-fuel ratio, the torque fluctuation of the internal combustion engine may become large. If the air-fuel ratio of a cylinder is gradually richened, the torque fluctuation may be reduced. However, the temperature raising capability obtained through the dither control will decrease.

This is because the temperature raising capability resulting from the dither control process has a positive correlation with an absolute value of a difference between the air-fuel ratio of a rich cylinder and the air-fuel ratio of a lean cylinder.

### DISCLOSURE

Examples of the present disclosure will now be described.

Example 1. The internal combustion engine to which a control device is applied includes an exhaust gas purifier that purifies exhaust gas discharged from a plurality of cylinders and a plurality of fuel injection valves that are respectively provided for the cylinders. The control device is configured to execute a dither control process for operating the fuel injection valves in order to set at least one of the cylinders as a rich combustion cylinder and to set at least another one of the cylinders that differs from the at least one of the cylinders as a lean combustion cylinder. The rich combustion cylinder has an air-fuel ratio that is richer than a stoichiometric air-fuel ratio. The lean combustion cylinder has an air-fuel ratio that is leaner than the stoichiometric air-fuel ratio. A temperature raising capability required for the dither control process in a second mode is higher than that required for the dither control process in a first mode. The control device is also configured to execute an enlarging process for setting a time integration value of the second mode to be greater than a time integration value of the first mode. The time integral value is obtained by time-integrating an absolute value of a difference between the air-fuel ratio of the rich combustion cylinder and the air-fuel ratio of the lean combustion cylinder over a predetermined period.

When the time integration value is large, the temperature raising capability within a predetermined period tends to be higher than when the time integration value is smaller. However, the torque fluctuation of the internal combustion engine tends to become larger. Therefore, in the above configuration, by setting the time integration value to be larger in the second mode than in the first mode, the temperature raising capability can be increased. Further, by setting the time integration value to be smaller in the first mode than in the second mode, torque fluctuation can be reduced in the internal combustion engine.

Example 2. The control device according to example 1 is configured to further execute a changing process for changing the at least one of the cylinders set as the rich combustion cylinder. The changing process includes a gradual change process executed in at least the first mode. When changing the at least one cylinder set as the rich combustion cylinder, the gradual change process gradually decreases the rich degree of the rich combustion cylinder before the change and the lean degree of the lean combustion cylinder before the change and then gradually increases the rich degree of the rich combustion cylinder after the change and the lean degree of the lean combustion cylinder after the change. The enlarging process includes a process for setting the time integration value of the second mode to be greater than the time integration value of the first mode by changing the changing process between the first mode and the second mode.

In the above configuration, in at least the first mode, gradual change process enters the changing process. When the gradual change process is executed, the difference between the air-fuel ratio of the rich combustion cylinder and the air-fuel ratio of the lean combustion cylinder becomes smaller than that when the gradual change process is not executed. As the change cycle of the rich combustion cylinder becomes shorter, the frequency entering the gradual change process increases. Therefore, when the predetermined period for calculating the time integration value is set to be longer than the change cycle of the rich combustion cylinder, a shorter change cycle of the rich combustion cylinder decreases the time integration value in the predetermined period. In addition, when the gradual change period, which is the period during which the gradual change process is executed, is short, the time integration value in the predetermined period is greater than that when the gradual change period is long. This allows the process for expanding the time integration value to be implemented in accordance with how the changing process is performed.

Example 3. In the control device according to example 2, the changing process also includes the gradual change process in the second mode, and the enlarging process includes a process for setting the time integration value of the second mode to be greater than the time integration value of the first mode by setting a longer cycle for the change performed by the changing process in the second mode than the first mode.

In the above configuration, the enlarging process is implemented by including the process for lengthening the change cycle of the rich combustion cylinder taking into account that the frequency entering the gradual change process becomes lower as the change cycle of the rich combustion cylinder becomes longer.

Example 4. In the control device according to example 2 or 3, the enlarging process includes a process for setting the time integration value of the second mode to be greater than the time integration value of the first mode by setting a shorter time for changing the air-fuel ratio of the rich combustion cylinder to be leaner than the stoichiometric air-fuel ratio in the second mode than in the first mode.

The above configuration takes into account that the time integration value can be increased when the period during which the gradual change process is executed is short than when the period is long. That is, in the above configuration, the enlarging process is achieved by including a process of shortening the time for setting the air-fuel ratio to be leaner than the stoichiometric air-fuel ratio by setting the air-fuel ratio of the rich combustion cylinder to be lean.

Example 5. In the control device according to any one of examples 1 to 4, the enlarging process includes a process for setting the time integration value of the second mode to be larger than the time integration value of the first mode by setting the absolute value of the difference between the air-fuel ratio of the rich combustion cylinder and the air-fuel ratio of the lean combustion cylinder to be larger in the second mode than in the first mode.

In the above configuration, the time integration value can also be increased by increasing the absolute value of the difference between the air-fuel ratio of the rich combustion cylinder and the air-fuel ratio of the lean combustion cylinder. That is, in the above configuration, the enlarging process is implemented by including a process for increasing the absolute value of the difference between the air-fuel ratio of the rich combustion cylinder and the air-fuel ratio of the lean combustion cylinder in the enlarging process.

Example 6. In the control device according to any one of examples 1 to 5, the exhaust gas purifier includes an upstream exhaust gas purifier and a downstream exhaust gas purifier located at a downstream side of the upstream exhaust gas purifier. The control device is configured to execute the dither control process of the first mode in accordance with a temperature raising request of the upstream exhaust gas purifier. The control device is also configured to execute the dither control process of the second mode in accordance with a temperature raising request of the downstream exhaust gas purifier.

Since the downstream exhaust gas purifier is separated farther from the combustion chambers than the upstream exhaust gas purifier, the downstream exhaust gas purifier is less susceptible to heat of the exhaust gas. Therefore, when responding to a temperature raising request in the downstream exhaust gas purifier, a request for raising the temperature raising capability of the dither control process tends to occur. Therefore, in the above configuration, the dither control process for the second mode is executed in accordance with the temperature raising request of the downstream exhaust gas purifier.

Example 7. In the control device according to any one of examples 1 to 6, the control device is configured to further execute a notifying process for issuing a notification that a rotational fluctuation of the crankshaft of the internal combustion engine will increase prior to execution of the dither control process in the second mode.

In the dither control process in the second mode, the torque fluctuation of the internal combustion engine tends to increase as compared with the dither control process in the first mode. Therefore, in the above configuration, by executing the notifying process, prior to executing the dither control process in the second mode, the user will not feel any awkwardness.

Example 8. A method for controlling an internal combustion engine that executes the processes described in examples 1 to 6 is embodied.

Example 9. A non-transitory computer readable recording medium that stores a program that has a processing device execute control processes described in examples 1 to 7 on an internal combustion engine.

Other aspects and advantages of the present invention will become apparent from the following description, taken in conjunction with the accompanying drawings, illustrating by way of example the principles of the invention.

### BRIEF DESCRIPTION OF DRAWINGS

The invention, together with objects and advantages thereof, may best be understood by reference to the following description of the presently preferred embodiments together with the accompanying drawings in which:
Fig. 1 is a diagram illustrating an internal combustion engine and a control device according to a first embodiment;
Fig. 2 is a block diagram illustrating part of a process executed by the control device in the internal combustion engine of Fig. 1;
Fig. 3 is a flowchart illustrating a procedure of request value output process in the internal combustion engine of Fig. 1;
Fig. 4 is a diagram illustrating an execution region of dither control in the internal combustion engine of Fig. 1;
Fig. 5 is a diagram illustrating an upper limit value of an injection amount correction request value in the internal combustion engine of Fig. 1;
Fig. 6 is a flowchart illustrating a procedure of request value output process in the internal combustion engine of Fig. 1;
Fig. 7 is a time chart illustrating a rich combustion cylinder switching process in the internal combustion engine of Fig. 1;
Fig. 8 is a diagram illustrating an internal combustion engine and a control device according to a second embodiment; and
Fig. 9 is a flowchart illustrating a procedure of a request value output process in the internal combustion engine of Fig. 8.

### DETAILED DESCRIPTION

### First Embodiment

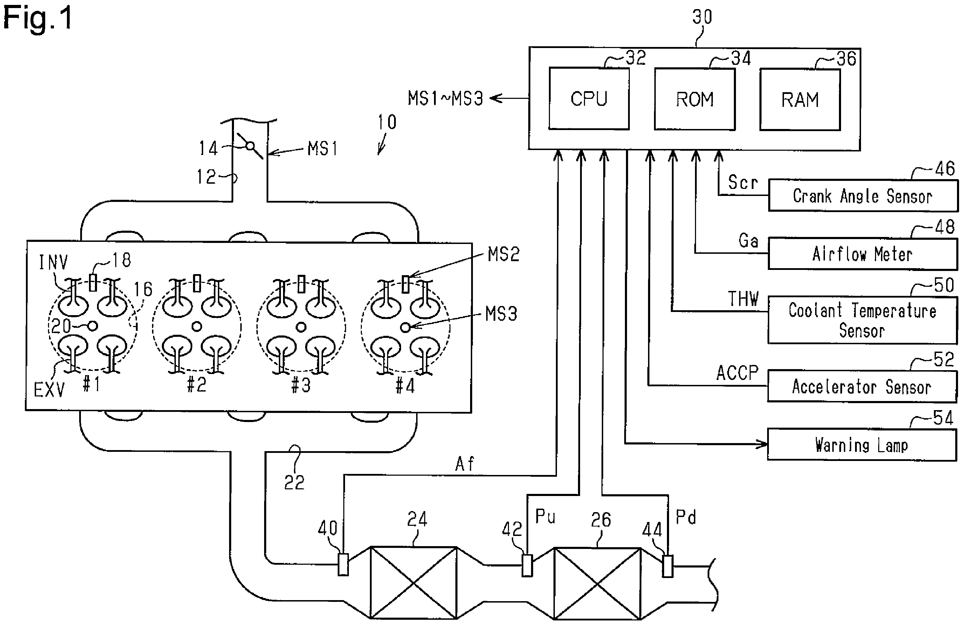

A first embodiment of a control device (controller) of an internal combustion engine will now be described with reference to Figs. 1 to 7.

In the internal combustion engine 10 illustrated in Fig. 1, valve closing timing of an intake valve INV may be located at a retard side of a bottom dead center. In the internal combustion engine 10, air suctioned from an intake passage 12 flows into combustion chambers 16 of cylinders #1 to #4 through each corresponding intake valve INV. Each of cylinders #1 to #4 is provided with a fuel injection valve 18 that injects fuel and an ignition device 20 that generates a spark discharge. In each combustion chamber 16, a mixture of air and fuel is burned and the burned air-fuel mixture used is discharged as exhaust gas when an exhaust valve EXV opens into an exhaust gas passage 22. A three-way catalyst 24 having oxygen storage capability is provided in the exhaust gas passage 22. Further, a gasoline particulate filter (GPF 26) is provided at a downstream side of the three-way catalyst 24 in the exhaust gas passage 22.

The control device (controller) 30 operates an operating unit of the internal combustion engine 10, such as the fuel injection valves 18 or the ignition devices 20, to control a control amount (torque, exhaust component, etc.) of the internal combustion engine 10 that is the subject of control. In such a case, the control device 30 refers to the air-fuel ratio Af detected by an air-fuel ratio sensor 40 provided at an upstream side of the three-way catalyst 24, the pressure at the upstream side of the GPF 26 (upstream pressure Pu) detected by an upstream pressure sensor 42, and the pressure at the downstream side of the GPF 26 (downstream pressure Pd) detected by a downstream pressure sensor 44. Further, the control device 30 refers to an output signal Scr of a crank angle sensor 46, an intake air amount Ga detected by an airflow meter 48, the temperature of the coolant in the internal combustion engine 10 (coolant temperature THW) detected by a coolant temperature sensor 50, and a depression amount of the accelerator pedal (accelerator operation amount ACCP) detected by an accelerator sensor 52. The control device 30 includes a CPU 32, a ROM 34, and a RAM 36. The CPU 32 executes programs stored in the ROM 34 to control the control amount.

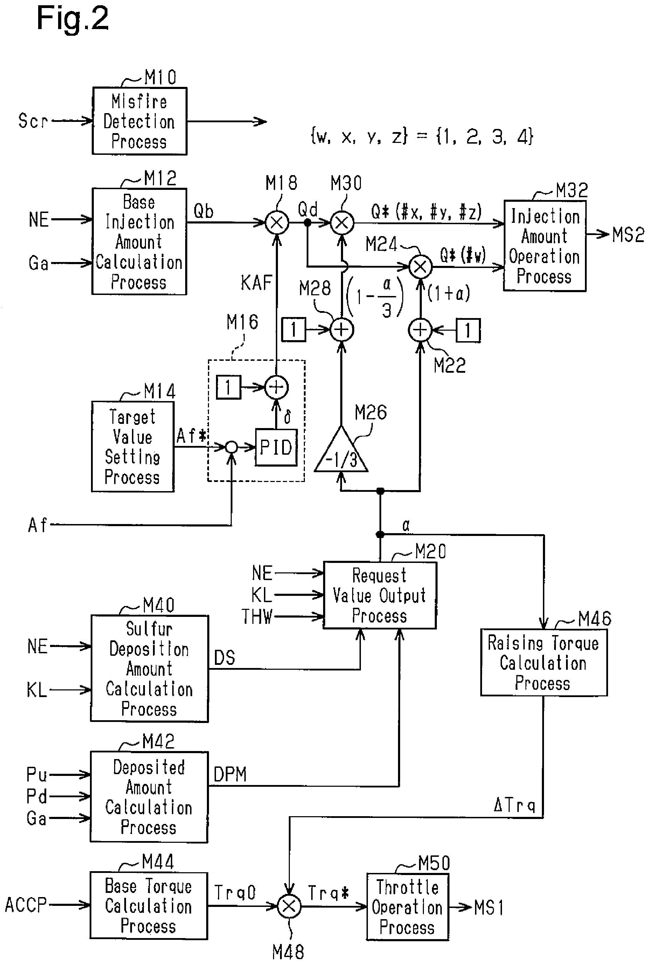

Fig. 2 illustrates part of a processes implemented by the CPU 32 when executing a program stored in the ROM 34.

A misfire detection process M10 is a process for determining the occurrence of a misfire from the output signal Scr. The misfire detection process M10 includes a process for tentatively determining the occurrence of a misfire from the output signal Scr when a rotational fluctuation amount Δω is less than or equal to a negative threshold value. The rotational fluctuation amount Δω is obtained from the rotation speed for a predetermined angular interval including only one compression top dead center (instantaneous rotation speed ω). More specifically, the rotational fluctuation amount Δω is calculated by subtracting the instantaneous rotation speed ω obtained during one compression top dead center from the instantaneous rotation speed ω obtained during the preceding top dead center. During a period in which the crankshaft of the internal combustion engine 10 is rotated a predetermined number of times, if the number of times a misfire is tentatively determined becomes greater than or equal to a threshold value, the misfire detection process M10 formally determined that a misfire is occurring and activates a warning lamp 54, which is illustrated in Fig. 1, to notify the user. Further, the misfire detection process M10 resets the tentative determination history for every predetermined number of crankshaft rotations.

A base injection amount calculation process M12 is a process for calculating a base injection amount Qb from the rotation speed NE and the intake air amount Ga, which are obtained from the output signal Scr of the crank angle sensor 46. The base injection amount Qb is an open loop operation amount that is an operation amount for open-loop controlling the air-fuel ratio of the air-fuel mixture in the combustion chamber 16 to be equal to a target air-fuel ratio.

A target value setting process M14 is a process of Setting a target value Af* for a feedback control amount used to control the air-fuel ratio of the mixture in the combustion chamber 16 to be equal to the target air-fuel ratio.

A feedback process M16 is a process for calculating a feedback operation amount KAF that is an operation amount for feedback-controlling the air-fuel ratio Af, which is the feedback control amount, to be equal to the target value Af*. In the present embodiment, the sum of the output values of a proportional element, an integral element, and a differential element that use the difference between the target value Af* and the air-fuel ratio Af as an input is set as a correction ratio δ of the base injection amount Qb. The feedback operation amount KAF is set as "1+δ."

A feedback correction process M18 is a process for correcting the base injection amount Qb by multiplying the base injection amount Qb by the feedback operation amount KAF. The feedback correction process M18 also calculates a request injection amount Qd.

A request value output process M20 calculates and outputs an injection amount correction request value α (hereinafter referred to as the correction request value α) of the dither control that causes the components of the entire exhaust gas discharged from each of cylinders #1 to #4 of the internal combustion engine 10 to differ between cylinders while setting the air-fuel ratio of the burned air-fuel mixture in every one of cylinders #1 to #4 to be equal to the target air-fuel ratio. Here, in the dither control according to the present embodiment, one of the first to fourth cylinders #1 to #4 is set as a rich combustion cylinder of which the air-fuel ratio of the air-fuel mixture is richer than the stoichiometric air-fuel ratio. The remaining three cylinders are set as lean combustion cylinders of which the air-fuel ratio of the air-fuel mixture is leaner than the stoichiometric air-fuel ratio. Further, the injection amount of the rich combustion cylinder is set to "1+α" times greater than the request injection amount Qd, and the injection amount in the lean combustion cylinder is set to "1-(α/3)" times greater than the request injection amount Qd. As long as the same amount of air is delivered into each of cylinders #1 to #4, with the components of the entire exhaust gas discharged from each of cylinders #1 to #4 of the internal combustion engine 10, the setting of the injection amount for a lean combustion cylinder and a rich combustion cylinder results in the air-fuel ratio of the air-fuel mixture burned in every one of cylinders #1 to #4 being equal to the target air-fuel ratio. With the setting of the injection amount, if the same amount of air is delivered into cylinders #1 to #4, a reciprocal of an average value of the fuel-air ratio of the air-fuel mixture burned in each cylinder will be the target air-fuel ratio. The "fuel-air ratio" is the reciprocal of the air-fuel ratio.

A correction coefficient calculation process M22 is a process for adding the correction request value α to "1" to calculate the correction coefficient of the request injection amount Qd for the rich combustion cylinder. A dither correction process M24 is a process for multiplying the request injection amount Qd by the correction coefficient "1+α" to calculate an injection amount command value Q* for cylinder #w that is set as the rich combustion cylinder. Here, "w" represents one of "1" to "4."

A multiplication process M26 is a process for multiplying the correction request value α by "-1/3." A correction coefficient calculation process M28 is a process for adding the output value of the multiplication process M26 to "1" and calculating a correction coefficient of the request injection amount Qd for a lean combustion cylinder. A dither correction process M30 is a process for multiplying the request injection amount Qd by the correction coefficient "1-(α/3)" to calculate the injection amount command value Q* of cylinders #x, #y, and #z that are the lean combustion cylinders. Here, "x," "y," and "z" are each any one of "1" to "4." Further, "w," "x," "y," and "z" different from one another.

The injection amount operation process M32 generates an operation signal MS2 for the fuel injection valve 18 of cylinder #w, which is a rich combustion cylinder, based on the injection amount command value Q* output from the dither correction process M24, outputs the operation signal MS2 to the fuel injection valve 18, and operates the fuel injection valve 18 so that the amount of fuel injected from the fuel injection valve 18 becomes an amount corresponding to the injection amount command value Q*. Further, the injection amount operation process M32 generates an operation signal MS2 of the fuel injection valves 18 for cylinders #x, #y, and #z, which are lean combustion cylinders, based on the injection amount command value Q* output in the dither correction process M30, outputs the operation signal MS2 to the fuel injection valve 18 to operates the fuel injection valve 18 so that the fuel amount injected from the fuel injection valve 18 becomes equal to an amount corresponding to the injection amount command value Q*.

A sulfur deposition amount calculation process M40 is a process for calculating a sulfur deposition amount DS of the three-way catalyst 24 based on a rotation speed NE and a load factor KL. Specifically, for example, the sulfur deposition amount calculation process M40 is a process for calculating a higher increase amount for the sulfur deposition amount DS as the rotation speed NE increases and the load factor KL increases. Further, the sulfur deposition amount calculation process M40 integrates the increase amount to calculate the sulfur deposition amount DS. Here, the load factor KL is a parameter indicating the air amount delivered into the combustion chamber 16. The load factor KL is calculated by the CPU 32 based on the intake air amount Ga. The load factor KL is a ratio of the inflow air amount per combustion cycle of one cylinder to a reference inflow air amount. In the present embodiment, the reference inflow air amount is set as an inflow air amount per combustion cycle of one cylinder when the opening degree of the throttle valve 14 is the maximum. The reference inflow air amount may be an amount variably set in accordance with the rotation speed NE.

A deposited amount calculation process M42 is a process for calculating and outputting a quantity (PM deposit amount DPM) of PM collected in the GPF 26 based on the upstream pressure Pu, the downstream pressure Pd, and the intake air amount Ga. When the differential pressure obtained by subtracting the downstream pressure Pd from the upstream pressure Pu is high, the deposited amount calculation process M42 sets the PM deposit amount DPM to a larger value than a case where the differential pressure is low. When the intake air amount Ga is large, the deposited amount calculation process M42 sets the PM deposit amount DPM to a smaller value than a case where the intake air amount Ga is small. Specifically, the ROM 34 stores map data, of which the differential pressure and the intake air amount Ga are set as input variables and the PM deposit amount DPM is set as an output variable. The CPU 32 obtains the PM deposit amount DPM from the map. Here, "map data" is a data set of discrete values of the input variables and values of output variables respectively corresponding to the values of input variables. Further, for example, when the value of the input variable matches any one of the values of the input variable of the map data, the map calculation sets the value of the output variable of the corresponding map data as the calculation result. If there is no match, a value obtained by interpolating the values of a plurality of output variables included in the map data may be used as the calculation result.

A base torque calculation process M44 is a process for calculating a base torque Trq0, which is a basic value of the torque required for the internal combustion engine 10, based on the accelerator operation amount ACCP. More specifically, the base torque calculation process M44 is a process for calculating a larger base torque Trq0 when the accelerator operation amount ACCP is large than when the accelerator operation amount ACCP is small.

A raising torque calculation process M46 is a process for calculating a raising torque ΔTrq for raising the base torque Trq0 based on the correction request value α. Specifically, the raising torque calculation process M46 is a process in which, when the correction request value α is zero, the raising torque ΔTrq is zero, and as the correction request value α increases, the raising torque ΔTrq is set to a larger value.

A request torque calculation process M48 is a process for calculating the request torque Trq* for the internal combustion engine 10 by adding the raising torque ΔTrq to the base torque Trq0.

A throttle operation process M50 is a process for generating the operation signal MS1 to output the operation signal MS1 to the throttle valve 14 so as to change the opening degree of the throttle valve 14 based on the request torque Trq*. Specifically, the throttle operation process M50 is a process for changing the opening degree of the throttle valve 14 to a larger value when the request torque Trq* is large than when the request torque Trq* is small. The throttle operation process M50 according to the present embodiment is a process of Setting the opening degree of the throttle valve 14 necessary for setting the request torque Trq* under the assumption that the dither control is not executed. When the dither control is executed, the torque decreases as compared with when the air-fuel ratio is the same in every one of the cylinders. Thus, the request torque Trq* is raised using the raising torque ΔTrq. That is, when the dither control is being executed, the throttle operation process M50 provides the raising torque ΔTrq to change the opening degree of the throttle valve 14 necessary for obtaining the base torque Trq0. The torque decreases when executing the dither control because the decrease amount of the torque when performing the decrease quantity correction of the request injection amount Qd on a lean combustion cylinder is greater than the increase amount of the torque when performing the increase amount correction of the request injection amount Qd on a rich combustion cylinder.

The request value output process M20 sets the correction request value α to a value greater than zero when a warming-up request of the three-way catalyst 24 is produced, an execution request of the sulfur removal process for the three-way catalyst 24 is produced, and an execution request of the regeneration process (filter regeneration process) of the GPF 26 is produced. Here, the dither control according to the execution request of the warming-up request or the sulfur removal process is a process for raising the temperature of the three-way catalyst 24 by heat generated in the three-way catalyst 24 by the reaction between oxygen discharged from the lean combustion cylinder and the unburned fuel discharged from the rich combustion cylinder. In contrast, the dither control according to the execution request of the filter regeneration process is a process for raising the temperature of the GPF 26 having the exhaust gas flow into the GPF 26, in which the temperature of the exhaust gas has been raised by the heat generated in the three-way catalyst 24 by the reaction between the oxygen discharged from the lean combustion cylinder and the unburned fuel discharged from the rich combustion cylinder. Hereinafter, a state in which the warming-up request of the three-way catalyst 24 occurs is referred to as mode A, a state in which the execution request of the sulfur removal process occurs is referred to as mode B, and a state in which an execution request of the filter regeneration process occurs is referred to as mode C.

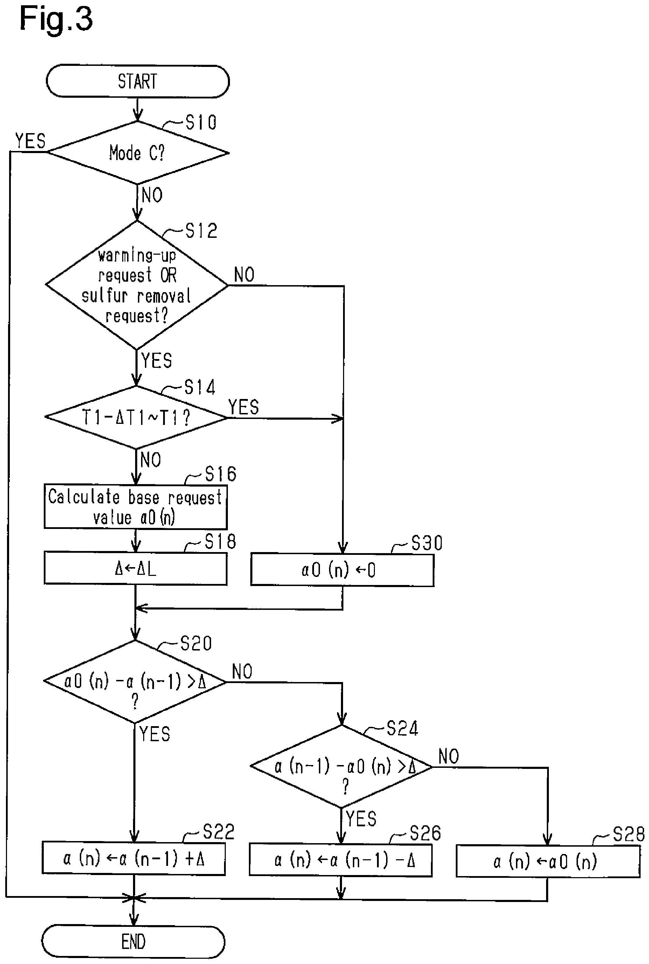

Fig. 3 illustrates the procedure of the request value output process M20 for modes A and B. The CPU 32 implements the process illustrated in Fig. 3 by repeatedly executing a program stored in the ROM 34, for example, in predetermined time cycles. Hereinafter, the combination of S and a number, with S added in front of the number, represents a step number.

In the series of processes illustrated in Fig. 3, the CPU 32 first determines whether or not mode C exists (S10). When determining that mode C does not exist(S10: NO), the CPU 32 determines whether a logical sum of the occurrence of a warming-up request of the three-way catalyst 24 and the occurrence of an execution request of sulfur removal process is true (S12). Here, the warming-up request of the three-way catalyst 24 is assumed to occur when a logical sum of a condition (i) that the integrated value InGa of the intake air amount Ga from the startup of the internal combustion engine 10 is greater than or equal to a first specified value Inth1 and a condition (ii) that the integrated value InGa is less than or equal to a second specified value Inth2 and the coolant temperature THW is less than or equal to a predetermined temperature THWth is true. Further, condition (i) is a condition in which the temperature at the upstream end portion of the three-way catalyst 24 is determined to be an active temperature. Further, the condition (ii) is a condition in which the entire three-way catalyst 24 is determined as not yet being active. The execution request of the sulfur removal process is produced when the sulfur deposition amount DS is greater than or equal to a predetermined amount.

When it is determined that the logical sum of the occurrence of the warming-up request of the three-way catalyst 24 and the occurrence of the execution request of the sulfur removal process is true (S12: YES), the CPU 32 determines whether, the CPU 32 determines that mode Aor mode B is existing and determines whether or not the elapsed time from when the execution of the dither control started or when the one of cylinders #1 to #4 set as the rich combustion cylinder was changed is within a predetermined period that is greater than or equal to the value obtained by subtracting a gradual change time ΔT1 from cycle T1 and shorter than or equal to cycle T1 (S14). Here, cycle T1 is set to a period during which the crankshaft of the internal combustion engine 10 is rotated a specified number of times that is less than or equal to the predetermined number of times specified by the misfire detection process M10. Further, the gradual change time ΔT1 is set to a time required until the correction request value α is gradually changed to zero by the processes of S20 to S28, which will be described later. If it is determined that the elapsed time from when execution of the dither control started or when the one of #1 to #4 set as the rich combustion cylinder was changed is not within a predetermined period and is greater than or equal to the value obtained by subtracting the gradual change time ΔT1 from cycle T1 and shorter than or equal to cycle T1 (S14: NO), the CPU 32 calculates the base request value α0 which is the base of the correction request value α (S16).

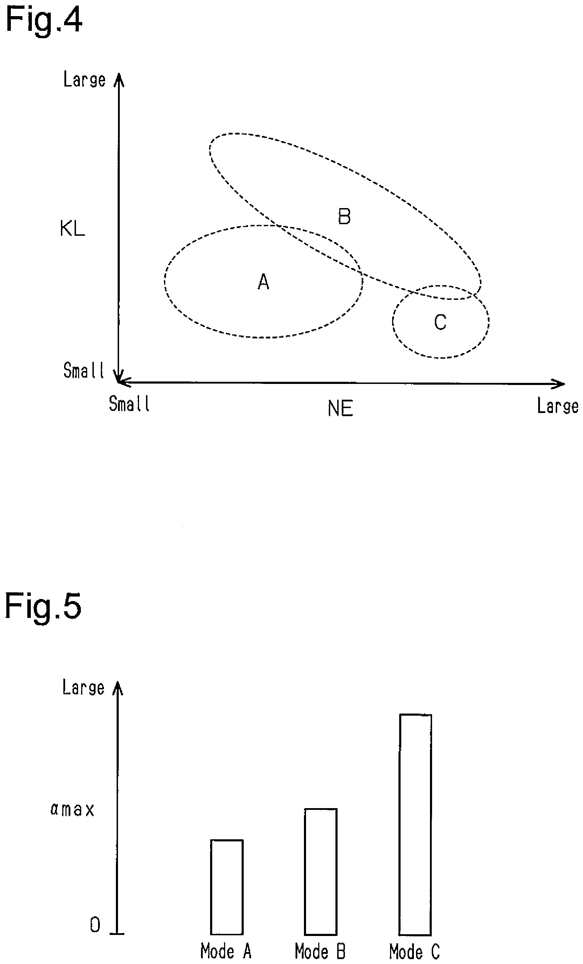

The CPU 32 calculates the base request value α0 by multiplying the upper limit value amax by the correction coefficient K variably set in accordance with the rotation speed NE and the load factor KL. Here, when mode A, the correction coefficient K becomes zero when the operating point of the internal combustion engine 10 is not included in a low load region A illustrated in Fig. 4. This is because the exhaust gas temperature is somewhat high even without executing the dither control in the regions other than the region A. In mode A, when the operating point of the internal combustion engine 10 is included in region A illustrated in Fig. 4, the CPU 32 variably sets the correction coefficient K in a range greater than zero and less than or equal to 1 in accordance with the operating point. Here, for example, in view of the fact that the exhaust flow rate per unit time when the rotation speed NE is large becomes greater than a case where the rotation speed NE is small, the correction coefficient K can be set to a small value. Further, for example, in view of the fact that the exhaust flow rate per unit time becomes greater when the load factor KL is large than when the load factor KL is small, the correction coefficient K can be set to a small value. Specifically, the ROM 34 may store map data having the rotation speed NE and the load factor KL as input variables and the correction coefficient K as an output variable, and the CPU 32 may obtain the correction coefficient K from the map.

Further, when mode B, the correction coefficient K is zero when the operating point of the internal combustion engine 10 is not included in a relatively high load region B illustrated in Fig. 4. This is because, when executing the sulfur removal process in the lower load region than in the region B, in order to greatly increase the temperature raising capability with the dither control, it is necessary to set the correction request value α to the value of the level at which the rotational fluctuation of the crankshaft causes the user to feel awkward. In mode B, when the operating point of the internal combustion engine 10 is included in region B illustrated in Fig. 4, the CPU 32 variably sets the correction coefficient K in the range of greater than zero and less than or equal to 1 in accordance with the rotation speed NE and the load factor KL. Specifically, the ROM 34 may store map data having the rotation speed NE and the load factor KL as input variables and the correction coefficient K as an output variable, and the CPU 32 may obtain the correction coefficient K from the map.

In the present embodiment, as illustrated in Fig. 5, the upper limit value amax of mode B is set to a larger value than the upper limit value amax of mode A. This is because the target temperature of the three-way catalyst 24 (for example, 650°C) in the sulfur removal process is higher than the target temperature of the three-way catalyst 24 (for example, 350°C) in the warming-up request of the three-way catalyst 24.

Returning to Fig. 3, the CPU 32 substitutes a normal gradual change amount ΔL for the gradual change amount Δ that defines the gradual change speed of the correction request value α (S18). The normal gradual change amount ΔL is a value for achieving a gradual change speed that can change the air amount delivered into the combustion chamber 16 by the operation of the throttle valve 14 in accordance with the change in the raising torque ΔTrq. Further, the normal gradual change amount ΔL is a value that can sufficiently suppress a following delay.

When the process of S18 is completed, the CPU 32 determines whether or not the value obtained by subtracting the preceding correction request value α(n-1) from the present base request value α0(n) is greater than the gradual change amount Δ (S20). Here, the variable n designates specific data in the time series data such as the base request value α0. Hereinafter, data calculated in the present control cycle of the control cycle of the series of processes of Fig. 3 is designated as "n," and the data calculated in the preceding control cycle is designated as "n-1." Further, when determining that the value obtained by subtracting the preceding correction request value α(n-1) from the present base request value α0(n) is greater than the gradual change amount Δ (S20: YES), the CPU 32 puts the value obtained by adding the gradual change amount Δ to the preceding correction request value α(n-1) into the present correction request value α(n) (S22). In contrast, when determining that the value obtained by subtracting the preceding correction request value α(n-1) from the present base request value α0(n) is less than or equal to the gradual change amount Δ (S20: NO), the CPU 32 determines whether or not the value obtained by subtracting the present base request value α0(n) from the preceding correction request value α(n-1) is greater than the gradual change amount Δ (S24). Further, when determining that the value obtained by subtracting the current base request value α0(n) from the preceding correction request value α(n-1) is greater than the gradual change amount Δ (S24: YES), the CPU 32 substitutes the value obtained by subtracting the gradual change amount Δ from the preceding correction request value α(n-1) for the present correction request value α(n) (S26). Further, when determining that the value obtained by subtracting the present base request value α0(n) from the preceding correction request value α(n-1) is less than or equal to the gradual change amount Δ (S24: NO), the CPU 32 substitutes the present base request value α0(n) for the present correction request value α(n) (S28).

When determining that there is no temperature raising request (S12: NO) and when determining that the elapsed time from when execution of the dither control is started or when the one of cylinders #1 to #4 set as the rich combustion cylinder was changed is within a predetermined period that is greater than or equal to a value obtained by subtracting the gradual change time ΔT1 from cycle T1 and shorter than or equal to cycle T1 (S14: YES), the CPU 32 substitutes "0" for the target request value α0(n) (S30). Then, the CPU 32 proceeds to the process of S20.

When the processes of S22, S26 and S28 are completed or when an affirmative determination is given in the process of S10, the CPU 32 temporarily ends the series of processes illustrated in Fig. 3.

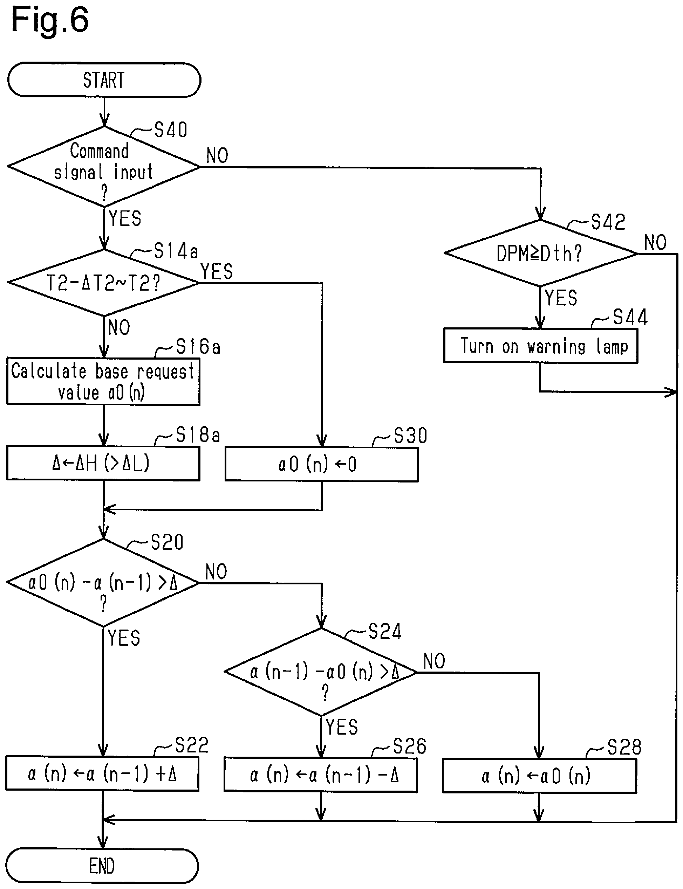

Fig. 6 illustrates the procedure of the request value output process M20 related to mode C. The CPU 32 implements the process illustrated in Fig. 6 by repeatedly executing a program stored in the ROM 34, for example, in predetermined cycles. In Fig. 6, for the sake of convenience, processes corresponding to the process illustrated in Fig. 3 are denoted by the same step numbers.

In the series of processes illustrated in Fig. 6, the CPU 32 first determines whether or not a command signal for performing a filter regeneration process is input to the control device 30 from an external device (S40). In a state in which a dedicated troubleshooting device (maintenance device) is connected to the control device 30 at a repair shop, the command signal is input from the maintenance device to the control device 30. That is, the process of S40 is a process for determining whether or not the vehicle is undergoing a filter regeneration process at a repair shop to where the user has brought the vehicle. When determining that a command signal for performing the filter regeneration process has not been input to the control device 30 from the external device (S40: NO), the CPU 32 determines whether or not the PM deposit amount DPM is greater than or equal to the threshold value Dth (S42). This process is for determining whether or not the regeneration of the GPF 26 is necessary. When determining that the PM deposit amount DPM is greater than or equal to the threshold value Dth (S42: YES), the CPU 32 operates the warning lamp 54 illustrated in Fig. 1 to prompt the user of the vehicle, on which the internal combustion engine 10 is mounted, to have the repair shop perform the filter regeneration process because the PM deposit amount DPM is large (S44). Then, the CPU 32 temporarily ends the series of processes illustrated in Fig. 6 when completing the process of S44 or when a negative determination is made in S42.

When determining that a command signal for the filter regeneration process has been input to the control device 30 from an external device (S40: YES), the CPU 32 determines whether or not the elapsed time from when the execution of the dither control started or when the one of cylinders #1 to #4 set as the rich combustion cylinder was changed is within a predetermined period that is greater than or equal to the value obtained by subtracting a gradual change time ΔT2 from cycle T2 and shorter than or equal to cycle T2 (S14a). Here, cycle T2 is set to a period during which the crankshaft of the internal combustion engine 10 is rotated a specified number of times that is less than or equal to the predetermined number of times specified by the misfire detection process M10. In particular, the specific number of times is a value greater than the predetermined number of times specified by the misfire detection process M10. In mode C, the gradual change time ΔT2 is set to the time required for the correction request value α to gradually change to zero through the processes of S20 to S28.

Next, the CPU 32 calculates the base request value α0 that is the base of the correction request value α (S16a).

The CPU 32 calculates the base request value α0 by multiplying the upper limit value amax by the correction coefficient K, which is variably set in accordance with the rotation speed NE and the load factor KL. Here, the correction coefficient K is zero when the operating point of the internal combustion engine 10 is not included in region C illustrated in Fig. 4. Further, when the operating point is included in region C illustrated in Fig. 4, the correction coefficient K is variably set in a range that is greater than zero and less than or equal to 1 in accordance with the operating point. Specifically, the ROM 34 stores map data having the rotation speed NE and the load factor KL as input variables and the correction coefficient K as an output variable, and the CPU 32 obtains the correction coefficient K from the map.

Further, as illustrated in Fig. 5, the CPU 32 sets the upper limit value amax of mode C to a value greater than that of mode B. This is one of the reasons that the GPF 26 is located at the downstream side of the three-way catalyst 24. More specifically, the target temperature (for example, 550°C) of the GPF 26 for the dither control in mode C is not necessarily higher than the target temperature of the three-way catalyst 24 by the dither control of mode B. However, the GPF 26 is located downstream of the three-way catalyst 24, and the temperature raising capability required for dither control is large in order to raise the temperature of the GPF 26 to the target temperature. Therefore, the upper limit value amax for mode C is set to a larger value than that for mode B.

Returning to Fig. 6, the CPU 32 substitutes a large temperature rise gradual change amount ΔH, which is greater than the normal gradual change amount ΔL, for the gradual change amount Δ (S18a). When determining that the time elapsed from when execution of the dither control started or when the one of cylinders #1 to #4 set as the rich combustion cylinder was changed is within the predetermined period that is greater than or equal to a value obtained by subtracting the gradual change time ΔT2 from cycle T2 and shorter than or equal to cycle T2 (S14a: YES), the CPU 32 proceeds to the process of S30. Further, when the processes of S18a and S30 are completed, the CPU 32 proceeds to the process of S20.

The operation of the present embodiment will be described.

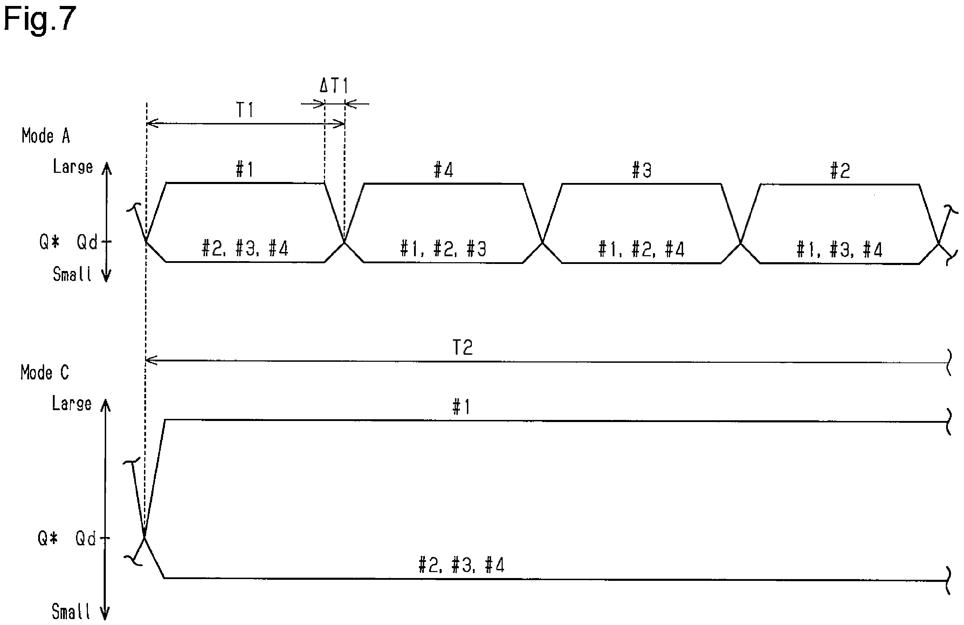

Fig. 7 illustrates the injection amount command value Q* in mode A and the injection amount command value Q* in mode C in comparison. As illustrated in Fig. 7, in the present embodiment, the rich combustion cylinder is switched in the order of cylinder #1, cylinder #4, cylinder #3, and cylinder #2.

Here, in mode A, cycle T1 is shorter than or equal to the length of the period at which the misfire detection process M10 integrates the number of times of tentative determinations. Here, during dither control, the absolute value of the rotational fluctuation amount Δω tends to be greater than that when dither control is not executed, because the torque of the rich combustion cylinder is greater than the torque of the lean combustion cylinder. In mode A and mode B because the correction request value α is set to reduce rotational fluctuation to an extent that the user does not feel the rotational fluctuation. Thus, the dither control would not be the only cause resulting in a tentative determination indicating the occurrence of a misfire occurs in the misfire detection process M10. However, due to one reason or another, for example, only a certain one of cylinders #1 to #4 may be slightly leaner than the target air-fuel ratio. For example, wear may cause a certain fuel injection valve 18 to inject fuel that is slightly less than the injection amount command value Q*. In such a case, if the cylinder is a lean combustion cylinder and the cylinder in which the compression top dead center comes next is the rich combustion cylinder, the rotational fluctuation amount Δω may be less than or equal to the threshold value. Thus, the misfire detection process M10 may erroneously determine the occurrence of a misfire. In this regard, it is difficult for the misfire detection process M10 to set the threshold value, which is compared with the rotational fluctuation amount Δω, so that the dither control does not result in an erroneously determination. This is because it is necessary to set a threshold value that ensures detection of a misfire when the misfire occurs.

In the present embodiment, cycle T1 is set to be shorter than or equal to the length of the period at which the misfire detection process M10 integrates the number of times of tentative determinations. Here, there is a low probability that the period at which the misfire detection process M10 integrates the number of times of tentative determinations perfectly matches the period of the specific cycle T1 of the dither control. Even if there is a perfect match, a period during which one cylinder is set as a rich combustion cylinder includes the gradual change time ΔT1. Thus, the period in which the correction request value α is set to the base request value α0 is shorter than cycle T1. Therefore, even though there is no misfire but the rotational fluctuation amount Δω is less than or equal to the threshold value because the cylinder in which the air-fuel ratio becomes leaner than expected is a lean combustion cylinder and the cylinder in which the compression top dead center comes next is a rich combustion cylinder, the period during which such a situation occurs is shorter than the period during which the misfire detection process M10 integrates the number of times of tentative determinations. This limits situations in which an erroneous determination is made in the misfire detection process M10.

Further, when switching the rich combustion cylinder, the CPU 32 gradually changes the correction request value α to zero. Therefore, it is possible to limit increases in the torque fluctuation of the internal combustion engine 10 resulting from switching of the rich combustion cylinder. When only the rich combustion cylinders are switched without gradually decreasing the correction request value α, the controllability of the air-fuel ratio of each cylinder decreases. Thus, the torque fluctuation of the internal combustion engine 10 increases. That is, for example, when the closing timing of the intake valve INV is retarded from the bottom dead center like in the present embodiment, some of the fuel injected into the combustion chamber 16 is blown back. Thus, the controllability of the air-fuel ratio has a tendency to deteriorate when switching the rich combustion cylinder in a stepped manner. Also, for example, when the internal combustion engine 10 is cold, a change in the amount of fuel collecting on a cylinder wall surface may deteriorate the controllability of the air-fuel ratio.

Furthermore, in the present embodiment, in modes A and B, the CPU 32 sets the gradual change speed with the normal gradual change amount ΔL. As a result, the air amount delivered into the combustion chamber 16 by the operation of the throttle valve 14 can be changed with a fast response to a change in the raising torque ΔTrq. This limits changes in the torque of the internal combustion engine 10 when switching the rich combustion cylinder.

In this manner, modes A and B are set to avoid erroneous determination of misfire without lowering drivability that would be caused by an increase in rotational fluctuation of the internal combustion engine 10.

In contrast, in mode C, the temperature raising capability of the dither control is set to be as high as possible. More specifically, the correction request value α is first set to be larger than that in modes A and B. This means that the difference between the torque resulting from combustion in a rich combustion cylinder and torque resulting from combustion in a lean combustion cylinder is greater than that in modes A and B. Thus, the rotational fluctuation of the crankshaft may be large. However, in mode C, dither control is performed in a special state in which the maintenance device is connected to the control device 30. The user does not use the power of the internal combustion engine 10 in mode C. Therefore, the user would not feel uncomfortable.

Further, in mode C, the gradual change speed is increased as compared with modes A and B. Although this increases rotational fluctuation as compared with modes A and B, the gradual change period is shortened. This limits the influence of decreases in the temperature raising capability during the gradual change period.

In mode C, cycle T2 for switching the rich combustion cylinders is longer than cycle T1 in modes A and B. This reduces the frequency of the gradual change period that decreases the temperature raising capability and limits the influence of decreases in the temperature raising capability resulting from gradual changes. In a state in which the maintenance device is connected, when the maintenance device invalidates the misfire detection process M10, erroneous determination of a misfire in the misfire detection process M10 would not matter.

### Second Embodiment

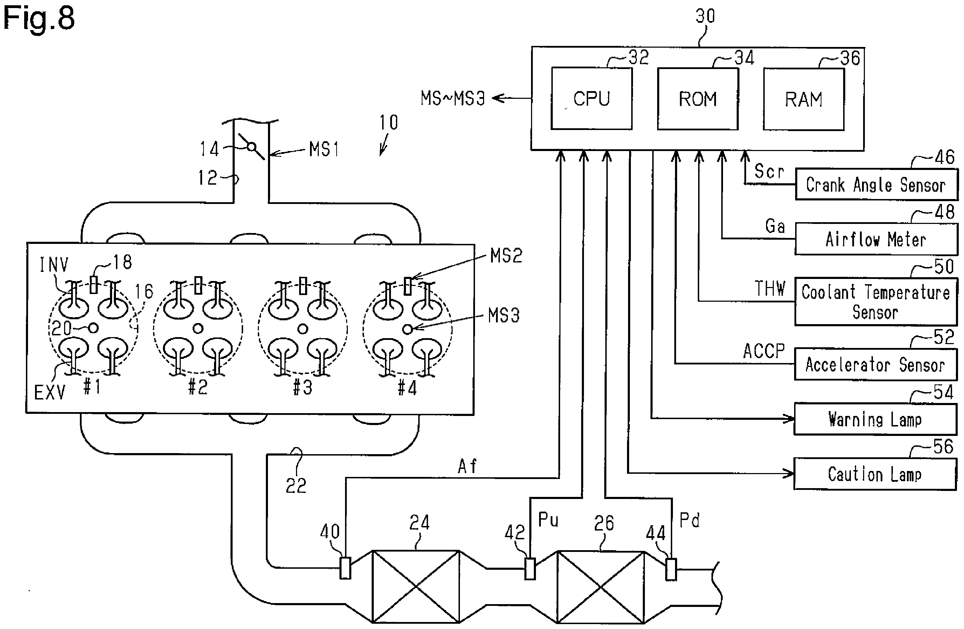

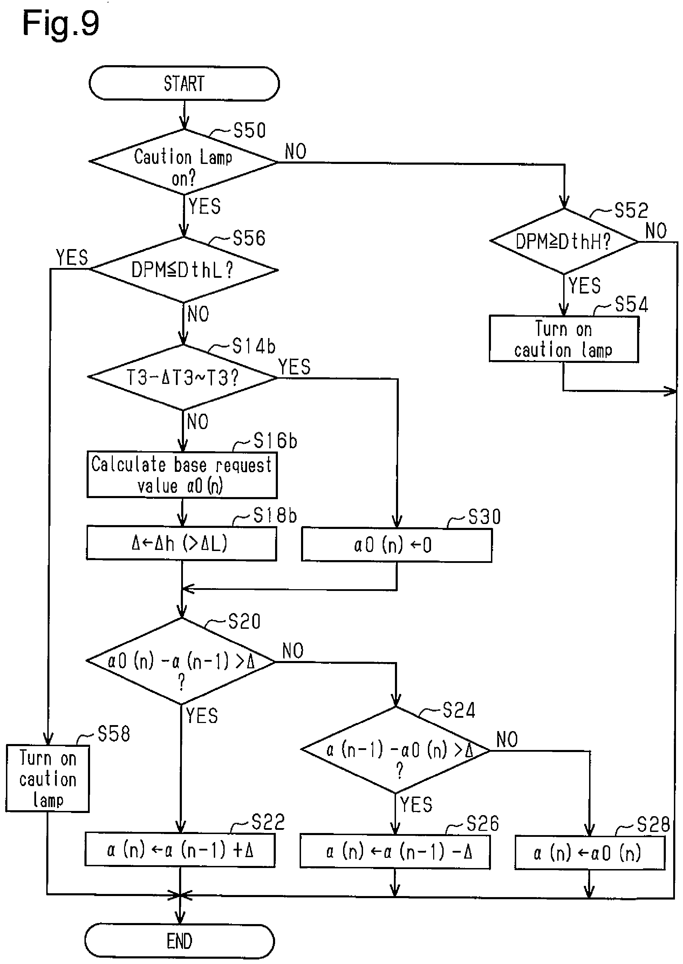

A second embodiment will now be described with reference to Figs. 8 and 9 focusing on differences from the first embodiment.

In the present embodiment, if the PM deposit amount DPM becomes large, the user executes a filter regeneration process when the internal combustion engine 10 is running and the user is not prompted to take the vehicle to a repair shop.

Fig. 8 illustrates a control device 30 according to the present embodiment and an internal combustion engine 10 that is subject to control. In Fig. 8, same reference numerals are given to those components that are the same as the corresponding components illustrated in Fig. 1. As illustrated in Fig. 8, in the present embodiment, the control device 30 can operate a caution lamp 56. The caution lamp 56 is for notifying the user that the rotational fluctuation of the internal combustion engine 10 has increased and needs maintenance.

Fig. 9 illustrates the procedure of the request value output process M20 related to the filter regeneration process. The CPU 32 implements the process illustrated in Fig. 9 by repeatedly executing a program stored in the ROM 34, for example, in predetermined cycles. Further, in Fig. 9, for the sake of convenience, processes corresponding to the processes illustrated in Fig. 6 are denoted by the same step numbers.

In the series of processes illustrated in Fig. 9, the CPU 32 first determines whether or not the caution lamp 56 is turned on (S50). When determining that the caution lamp 56 is not turned on (S50: NO), the CPU 32 determines whether or not the PM deposit amount DPM is greater than or equal to the regeneration threshold value DthH (S52). Further, when determining that the PM deposit amount DPM is greater than or equal to the regeneration threshold value DthH (S52: YES), the CPU 32 turns on the caution lamp 56 (S54). When the process of S54 is completed or when a negative determination is made in the process of S52, the CPU 32 temporarily ends the series of processes illustrated in Fig. 9.

When determining that the caution lamp 56 is turned on (S50: YES), the CPU 32 determines whether or not the PM deposit amount DPM is less than or equal to the end determination value DthL that is smaller than the regeneration threshold value DthH (S56). When determining that the PM deposit amount DPM is greater than the end determination value DthL (S56: NO), the CPU 32 determines whether the elapsed time from when execution of the dither control started or when the one of cylinders #1 to #4 set as the rich combustion cylinder was changed is within a predetermined period that is greater than or equal to a value obtained by subtracting the gradual change time ΔT3 from cycle T3 and shorter than or equal to cycle T3 (S14b). Here, cycle T3 is set to a value longer than cycle T1 of modes A and B. Further, the gradual change time ΔT3 is set to the time required for the correction request value α to gradually change to zero through the processes of S20 to S28 in the filter regeneration process.

When determining that the elapsed time from when execution of the dither control started or when the one of cylinders #1 to #4 set as the rich combustion cylinder was changed is within the predetermined period that is greater than or equal to the value obtained by subtracting the gradual change time ΔT3 from cycle T3 and shorter than or equal to cycle T3 (S14b: YES), the CPU 32 proceeds to the process of S30. When determining that the elapsed time is not within the predetermined period (S14b: NO), the CPU 32 calculates the base request value α0, which is the base of the correction request value α (S16b). The CPU 32 calculates the base request value α0 by multiplying the upper limit value amax by the correction coefficient K, which is variably set in accordance with the rotation speed NE and the load factor KL. The correction coefficient K is zero when the operating point of the internal combustion engine 10 is not included in region B (not region C) illustrated in Fig. 4. Further, when the operating point is included in region B illustrated in Fig. 4, the correction coefficient K is variably set in accordance with the operating point in a range of greater than zero and less than or equal to 1. That is, in the present embodiment, the user executes the filter regeneration process under the present operation state of the internal combustion engine 10. Thus, the filter regeneration process uses the same operating point region as the sulfur removal process. Specifically, the ROM 34 stores map data having the rotation speed NE and the load factor KL as input variables and the correction coefficient K as an output variable, and the CPU 32 obtains the correction coefficient K from the map. Further, the CPU 32 sets the upper limit value amax to a value greater than that for mode B. This is because the GPF 26 is located downstream of the three-way catalyst 24. Thus, even if the operating point for executing the sulfur removal process is the same as the operating point for executing the filter regeneration process, the temperature raising capability required for the filter regeneration process is higher than that required for the sulfur removal process.

Next, the CPU 32 substitutes the filter regeneration gradual change amount Δh, which is greater than the normal gradual change amount ΔL, for the gradual change amount Δ (S18 b). When the process of S18b is completed, the CPU 32 proceeds to the process of S20.

When determining that the PM deposit amount DPM is less than or equal to the end determination value DthL (S56: YES), the CPU 32 turns off the caution lamp 56 (S58) and temporarily ends the series of processes illustrated in Fig. 9.

As described above, in the present embodiment, when performing a process for notifying the user that the rotational fluctuation may become large, the correction request value α or the gradual change speed of the dither control process is increased to give priority to the raising of the temperature over drivability. In the present embodiment, when the caution lamp 56 is turned on, assuming that the period for integrating the number of times of tentative determinations is changed by the misfire detection process M10, cycle T3 for switching the rich combustion cylinder is set to be longer than modes A and B.

### Corresponding Relationship

The corresponding relationship between the items in the above embodiments and the items described in the "Summary" column will now be described. Hereinafter, the corresponding relationship is described for each number in the "Summary."
[1] "Exhaust gas purifier" corresponds to three-way catalyst 24 and the GPF 26. The "dither control process" corresponds to the correction coefficient calculation process M22, the dither correction process M24, the multiplication process M26, the correction coefficient calculation process M28, the dither correction process M30, and the injection amount operation process M32 when the correction request value α is greater than zero. "Enlarging process" corresponds to the processes of S14a, S16a, and S18a or the processes of S14b, S16b, and S18b.
[2] "Changing process" corresponds to a process for proceeding to the process of S30 when an affirmative determination is given in S14, S14a and S14b or in the process illustrated in Fig. 7.
[3] "Gradual change process" corresponds to the processes of S20 to S28.
[5] "Enlarging process" corresponds to the processes illustrated in Figs. 5 and 7.
[6] "Upstream exhaust gas purifier" corresponds to three-way catalyst 24, and "downstream exhaust gas purifier" corresponds to the GPF 26. The "first mode" corresponds to the dither control process in accordance with modes A and B.
[7] "Notifying process" corresponds to the process of S54.

### Other Embodiments

At least one of the items in the above embodiment may be changed as described below.

"First mode and second mode"

In the above embodiment, the first mode in which the required temperature raising capability is low is set as the dither control process for the warming-up process and the sulfur removal process for the three-way catalyst 24. Instead, for example, the filter regeneration process may be executed when the logical product of the fact that the PM deposit amount DPM is greater than or equal to a specified value smaller than the threshold value Dth and the fact that the operating point of the internal combustion engine 10 is in the high load region is true, and dither control process for the filter regeneration process may be set as the dither control process for the first mode.

In the above embodiment, the dither control process for filter regeneration process is set as the dither control process for the second mode. Instead, for example, the dither control process according to the warming-up request of the three-way catalyst 24 may be set as the dither control process for the first mode, and the dither control process for the sulfur removal process may be set as the dither control process for the second mode. Further, for example, as described below in the section of "the exhaust gas purifier," when the second three-way catalyst is provided at the downstream side of the three-way catalyst 24 shown in Fig. 1, the dither control process for the sulfur removal process may be set as the dither control process for the second mode.

In the first embodiment, the dither control process for the second mode is executed when the command signal is input from the maintenance device. Instead, for example, a predetermined operation state that cannot be expected in a normal operation performed by the user, such as simultaneous depression of the accelerator and the brake when the shift lever is in the neutral state, may be input as the command signal in the repair shop.

In the second embodiment, when executing the notifying process, the dither control process for the second mode is executed without obtaining permission from the user. Instead, the dither control may be executed under the condition that permission is obtained from the user.

### "Enlarging processing"

In the first embodiment, the dither control process for regenerating the GPF 26 increases each of the correction request value α, the cycle, and the gradual change speed from the dither control process in modes A and B. That is, in the first embodiment, while setting mode A and B as the first mode and mode C as the second mode, a time integration value is obtained by performing time-integration of the absolute value of the difference between the air-fuel ratio of the rich combustion cylinder and the air-fuel ratio of the lean combustion cylinder in each of the first mode and the second mode over a predetermined period. Further, the correction request value α in mode C is set to be greater than the correction request value α in modes A and B so that the time integration value of the second mode is greater than the time integration value of the first mode. The change cycle T2 of the rich combustion cylinder in mode C is set to be longer than the change cycle T1 of the rich combustion cylinder in modes A and B so that the time integration value of the second mode is set to be greater than the time integration value of the first mode I. In order for the gradual change speed in mode C to be greater than the gradual change speed in modes A and B, the large temperature rise gradual change amount ΔH in mode C can be set to be greater than the normal gradual change amount ΔL in modes A and B so that the time integration value of the second mode is greater than the time integration value of the first mode.

However, at least one of the correction request value α, the cycle, and the gradual change speed may be increased to increase the time integration value in the predetermined period of the absolute value of the difference between the air-fuel ratio of the rich combustion cylinder and the air-fuel ratio of the lean combustion cylinder. That is, for example, the cycle or the gradual change speed may be increased while setting the execution region of the dither control process for the regeneration of the GPF 26 to be a higher load than the region B and setting the correction request value α to be the same.

In the second embodiment, the correction request value α, the cycle, and the gradual change speed is increased in the dither control process executed after the notifying process as compared with the dither control process in modes A and B to increase the time integration value in the predetermined period of the absolute value of the difference between the air-fuel ratio of the rich combustion cylinder and the air-fuel ratio of the lean combustion cylinder is increased. Instead, for example, the correction request value α and the gradual change speed alone may be increased while setting cycle To be the same. For example, only the correction request value α may be increased while setting the cycle and the gradual change speed to be the same. Further, for example, the execution region of the dither control process executed after the notifying process may be set to be higher in load than region B, and only the gradual change speed may be increased while setting the correction request value α and cycle To be the same. However, there is no such limitation, and at least one of the correction request value α, the cycle, and the gradual change speed may be increased.

### "Gradual change process"

For example, the gradual change process may be deleted if some of the fuel flowing into the combustion chamber 16 is not blown back to the intake passage 12 in the internal combustion engine 10 or the like. However, the gradual change process may be performed even if some of the fuel flowing into the combustion chamber 16 is not blown back to the intake passage 12 in the internal combustion engine 10. For example, if the air-fuel ratio can be controlled with high accuracy taking into account the amount of fuel blown back into the intake passage 12, the gradual change process may be omitted. Further, for example, the gradual change process may be omitted only when the dither control process is performed in mode C.

### "PM deposit amount"

In the above embodiment, the PM deposit amount DPM is obtained from a map based on the intake air amount Ga and the differential pressure between the upstream pressure Pu and the downstream pressure Pd. Instead, for example, when the intake air amount Ga is greater than or equal to the specified value, a map may be used to obtain the PM deposit amount DPM. When the intake air amount Ga is less than the specified value, the PM deposit amount DPM may be estimated from the rotation speed NE, the load factor KL, the temperature of the coolant (coolant temperature THW) in the internal combustion engine 10, and the air-fuel ratio Af. This can be executed, for example, as follows. The ROM 34 stores map data having the rotation speed NE and the load factor KL as input variables and the PM deposition increase amount per unit time as an output variable, map data having the coolant temperature THW as an input variable and the coolant temperature correction coefficient as an output variable, and map data having the air-fuel ratio Af as an input variable and an air-fuel ratio correction coefficient as an output variable. Further, after the CPU 32 obtains the PM deposition increase amount from the map, the CPU 32 multiplies the PM deposition increase amount by the coolant temperature correction coefficient and the air-fuel ratio correction coefficient to calculate the PM deposition increase amount. In this manner, the PM deposit amount DPM is sequentially increased. When a state in which the intake air amount Ga is greater than or equal to the specified value is shifted to a state in which the intake air amount Ga is less than the specified value, the initial value of the PM deposit amount DPM may be set as a value calculated from the differential pressure. Further, when the intake air amount Ga is switched from a state less than the specified value to a state greater than or equal to the specified value, the PM deposit amount DPM calculated from the differential pressure is used.

Further, the PM deposit amount DPM may be estimated by successively integrating the PM deposition increase amount without using the differential pressure. Alternatively, the PM deposit amount DPM may be detected, using a dedicated sensor.

### "Dither control process"

In the above embodiment, the base request value α0 is calculated by multiplying the upper limit value amax by the correction coefficient K determined from the rotation speed NE and the load factor KL. Instead, for example, a value obtained by multiplying the basic value determined in accordance with the coolant temperature THW by the correction coefficient K using the upper limit value amax as the upper limit may be set as the base request value α0.

For example, the base request value α0 may be variably set based on only two parameters, namely, the rotation speed NE and the coolant temperature THW or the load factor KL and the coolant temperature THW. Further, for example, the base request value α0 may be variably set based on only one of the three parameters described above. Further, for example, instead of using the rotation speed NE and the load factor KL as parameters for specifying the operating point of the internal combustion engine 10, for example, an accelerator operation amount may be used as a load instead of using the load factor KL as a load. Further, instead of the rotation speed NE and the load, the base request value α0 may be variably set based on the intake air amount Ga.

The correction request value α does not necessarily have to be based on the operating point of the internal combustion engine. For example, the correction request value α may be a single value determined for each mode.

In the above embodiments, the number of the lean combustion cylinders is greater than the number of the rich combustion cylinders. Instead, for example, the number of rich combustion cylinders may be the same as the number of lean combustion cylinders. Cylinders #1 to #4 do not all have to be set as a lean combustion cylinder or a rich combustion cylinder. For example, the air-fuel ratio of one cylinder may be set to be equal to the target air-fuel ratio. The reciprocal of the average value of the fuel-air ratio does not necessarily have to be set as the target air-fuel ratio as long as the in-cylinder delivered air amount is the same within one combustion cycle. For example, when there are four cylinders like in the above embodiments, as long as the in-cylinder charged air amount is the same, the reciprocal of the average value of the fuel-air ratio in five strokes or three strokes may be the target air-fuel ratio. However, it is desirable that at least one out of two combustion cycles includes a period in which the rich combustion cylinder and the lean combustion cylinder both exist. In other words, when the in-cylinder charged air amount is the same during a predetermined period, it is desirable that the predetermined period be two combustion cycles or less when setting the reciprocal of the average value of the fuel-air ratio to the target air-fuel ratio. For example, if a rich combustion cylinder exists only once in two combustion cycles during a predetermined period of two combustion cycles, when a rich combustion cylinder is set as R and a lean combustion cylinder is set as L, the order in which a rich combustion cylinder and a lean combustion cylinder are set is, for example, "R, L, L, L, L, L, L, and L." In this case, a period of one combustion cycle that is shorter than the predetermined period would have the order of "R, L, L, and L," and some of cylinders #1 to #4 would be lean combustion cylinders while others are rich combustion cylinders. However, when the reciprocal of the average value of the fuel-air ratio in a period that is not one combustion cycle is set as the target air-fuel ratio, it is desirable that the amount of air blown back to the intake passage before the intake valve INV closes by some of the air temporarily suctioned in the intake stroke be negligible in the internal combustion engine.

### "Exhaust gas purifier"

In the above embodiment, the upstream exhaust gas purifier is set as the three-way catalyst 24 and the downstream exhaust gas purifier is set as the GPF 26. Instead, for example, each of the upstream exhaust gas purifier and the downstream exhaust gas purifier may be set as a first three-way catalyst and a second three-way catalyst. Further, for example, the upstream exhaust gas purifier may be set as a GPF and the downstream exhaust gas purifier may be set as a three-way catalyst. Moreover, for example, only three-way catalyst 24 may be provided. For example, only the GPF 26 may be used. However, when a catalyst having an oxygen occlusion capability is not provided at an upstream side of the GPF, it is desirable that an oxygen storage capability be added to the GPF in order to enhance the temperature raising capability during the dither control.

### "Temperature raising request for exhaust gas"

The temperature raising request is not limited to that exemplified in the above embodiment. For example, the temperature raising request for exhaust gas during the dither control may be generated to raise the temperature of the exhaust gas passage 22 and reduce the collection of condensed water in the exhaust gas passage 22.

### "Control device"

The control device is not limited to an apparatus that includes the CPU 32 and the ROM 34 and executes a software process. For example, at least some of the software processes in the above embodiment may be implemented by a dedicated hardware circuit (for example, ASIC or the like) and processed by hardware. That is, the control device may have any of the following configurations (a) to (c). (a) The apparatus includes a processing device that executes all the above processes with a program and a program storage device (including a non-transitory computer-readable recording medium) such as a ROM that stores the program. (b) The apparatus includes a processing device and a program storage device that execute some of the above processes with a program and a dedicated hardware circuit that executes the remaining processes. (c) The apparatus includes a dedicated hardware circuit for executing all of the above processes. Here, a plurality of software processing circuits including the processing device and the program storage device or a plurality of dedicated hardware circuits may be used. That is, the above process may be executed by a processing circuit including one or more software processing circuits or one or more dedicated hardware circuits.

### "Internal combustion engine"

The internal combustion engine is not limited to a four-cylinder internal combustion engine. For example, an in-line six-cylinder internal combustion engine may be used. Further, for example, an internal combustion engine such as a V-type internal combustion engine may include a first exhaust gas purifier and a second exhaust gas purifier, each purifying exhaust gas in different cylinders.

### "Others"

Instead of injecting fuel into the combustion chamber 16, for example, the fuel injection valve may inject fuel into the intake passage 12. An air-fuel ratio feedback control does not necessarily have to be performed when executing the dither control.

It should be apparent to those skilled in the art that the present invention may be embodied in many other specific forms without departing from the spirit or scope of the invention. Therefore, the present examples and embodiments are to be considered as illustrative and not restrictive, and the invention is not to be limited to the details given herein, but may be modified within the scope and equivalence of the appended claims.

## Claims

1. A control device (30) for an internal combustion engine (10), wherein the internal combustion engine (10) includes an exhaust gas purifier (24, 26) that purifies exhaust gas discharged from a plurality of cylinders (#1-#4) and a plurality of fuel injection valves (18) that are respectively provided for the cylinders (#1-#4), the control device (30) **characterized by** being configured to execute:
a dither control process for operating the fuel injection valves (18) in order to set at least one of the cylinders (#w) as a rich combustion cylinder and to set at least another one of the cylinders (#x, #y, #z) that differs from the at least one of the cylinders (#w) as a lean combustion cylinder, wherein the rich combustion cylinder has an air-fuel ratio that is richer than a stoichiometric air-fuel ratio, the lean combustion cylinder has an air-fuel ratio that is leaner than the stoichiometric air-fuel ratio, and a temperature raising capability required for the dither control process in a second mode is higher than that required for the dither control process in a first mode; and
an enlarging process for setting a time integration value of the second mode to be greater than a time integration value of the first mode, wherein the time integral value is obtained by time-integrating an absolute value of a difference between the air-fuel ratio of the rich combustion cylinder and the air-fuel ratio of the lean combustion cylinder over a predetermined period.

2. The control device (30) according to claim 1, **characterized in that**:
the control device (30) (30) is configured to further execute a changing process for changing the at least one of the cylinders (#w) set as the rich combustion cylinder;
the changing process includes a gradual change process executed in at least the first mode; and
when changing the at least one cylinder set as the rich combustion cylinder, the gradual change process gradually decreases the rich degree of the rich combustion cylinder before the change and the lean degree of the lean combustion cylinder before the change and then gradually increases the rich degree of the rich combustion cylinder after the change and the lean degree of the lean combustion cylinder after the change; and
the enlarging process includes a process for setting the time integration value of the second mode to be greater than the time integration value of the first mode by changing the changing process between the first mode and the second mode.

3. The control device (30) according to claim 2, **characterized in that** the changing process also includes the gradual change process in the second mode, and the enlarging process includes a process for setting the time integration value of the second mode to be greater than the time integration value of the first mode by setting a longer cycle for the change performed by the changing process in the second mode than the first mode.

4. The control device (30) according to claim 2 or 3, **characterized in that** the enlarging process includes a process for setting the time integration value of the second mode to be greater than the time integration value of the first mode by setting a shorter time for changing the air-fuel ratio of the rich combustion cylinder to be leaner than the stoichiometric air-fuel ratio in the second mode than in the first mode.

5. The control device (30) according to any one of claims 1 to 4, **characterized in that** the enlarging process includes a process for setting the time integration value of the second mode to be larger than the time integration value of the first mode by setting the absolute value of the difference between the air-fuel ratio of the rich combustion cylinder and the air-fuel ratio of the lean combustion cylinder to be larger in the second mode than in the first mode.

6. The control device (30) according to one of claims 1 to 5, **characterized in that** the exhaust gas purifier (24, 26) includes an upstream exhaust gas purifier (24) and a downstream exhaust gas purifier (26) located at a downstream side of the upstream exhaust gas purifier (24), wherein the control device (30) is configured to execute:
the dither control process of the first mode in accordance with a temperature raising request of the upstream exhaust gas purifier (24); and
the dither control process of the second mode in accordance with a temperature raising request of the downstream exhaust gas purifier (26).

7. The control device (30) according to one of claims 1 to 6, wherein the control device (30) **characterized by** being configured to further execute a notifying process for issuing a notification that a rotational fluctuation of the crankshaft of the internal combustion engine (10) will increase prior to execution of the dither control process in the second mode.

8. A method for controlling an internal combustion engine (10), wherein the internal combustion engine (10) includes an exhaust gas purifier (24, 26) that purifies exhaust gas discharged from a plurality of cylinders and a plurality of fuel injection valves (18) that are respectively provided for the cylinders, the method being **characterized by** comprising:
executing a dither control process for operating the fuel injection valves (18) in order to set at least one of the cylinders (#w) as a rich combustion cylinder and to set at least another one of the cylinders (#x, #y, #z) that differs from the at least one of the cylinders (#w) as a lean combustion cylinder, wherein the rich combustion cylinder has an air-fuel ratio that is richer than a stoichiometric air-fuel ratio, the lean combustion cylinder has an air-fuel ratio that is leaner than the stoichiometric air-fuel ratio, and a temperature raising capability required for the dither control process in a second mode is higher than that required for the dither control process in a first mode; and
setting a time integration value of the second mode to be greater than a time integration value of the first mode, wherein the time integral value is obtained by time-integrating an absolute value of a difference between the air-fuel ratio of the rich combustion cylinder and the air-fuel ratio of the lean combustion cylinder over a predetermined period.

9. A non-transitory computer readable recording medium that stores a program that has a processing device execute a control process on an internal combustion engine (10), the internal combustion engine (10) including an exhaust gas purifier (24, 26) that purifies exhaust gas discharged from a plurality of cylinders and a plurality of fuel injection valves (18) that are respectively provided for the cylinders, the control process being **characterized by** comprising:
executing a dither control process for operating the fuel injection valves (18) in order to set at least one of the cylinders (#w) as a rich combustion cylinder and to set at least another one of the cylinders (#x, #y, #z) that differs from the at least one of the cylinders (#w) as a lean combustion cylinder, wherein the rich combustion cylinder has an air-fuel ratio that is richer than a stoichiometric air-fuel ratio, the lean combustion cylinder has an air-fuel ratio that is leaner than the stoichiometric air-fuel ratio, and a temperature raising capability required for the dither control process in a second mode is higher than that required for the dither control process in a first mode; and
setting a time integration value of the second mode to be greater than a time integration value of the first mode, wherein the time integral value is obtained by time-integrating an absolute value of a difference between the air-fuel ratio of the rich combustion cylinder and the air-fuel ratio of the lean combustion cylinder over a predetermined period.
